# EUROPEAN PATENT SPECIFICATION

(11) **EP 3 096 121 B1**
(45) Date of publication and mention of the grant of the patent: **06.11.2019**
(21) Application number: 16170569.4
(22) Date of filing: 20.05.2016
(51) Int. Cl.: G01L 23/10

(54) **METHOD OF MANUFACTURING PRESSURE SENSOR AND PRESSURE SENSOR**
VERFAHREN ZUR HERSTELLUNG EINES DRUCKSENSORS SOWIE DRUCKSENSOR
PROCÉDÉ DE FABRICATION POUR CAPTEUR DE PRESSION ET UN TEL CAPTEUR

(30) Priority: 21.05.2015 JP 2015103650; 04.12.2015 JP 2015237095
(43) Date of publication of application: 23.11.2016
(73) Proprietor: NGK Spark Plug Co., Ltd., Nagoya-shi, Aichi 4678525 (JP)
(72) Inventor: YAMADA, Tatsunori, Nagoya-shi, Aichi 4678525 (JP); IWABUCHI, Junki, Nagoya-shi, Aichi 4678525 (JP)
(74) Representative: Behr, Wolfgang

(56) References cited:
- EP-A1- 2 559 943
- EP-A1- 2 866 013
- EP-A2- 0 637 736
- US-A1- 2010 037 698

## Description

### BACKGROUND OF THE INVENTION

### 1. Field of the Invention

The present invention relates to a pressure sensor.

### 2. Background of the Invention

A pressure sensor is known which includes a tubular housing and has a structure in which a diaphragm which deforms upon receiving pressure is joined to one end of the housing. Also, a piezoelectric element to which the pressure received by the diaphragm is transferred is disposed in the housing. In such a pressure sensor, when the side where the diaphragm is present is defined as the forward end side and the side opposite thereto in the direction of the axis (center axis) of the housing is defined as the rear end side, application of a preload to the piezoelectric element has conventionally been performed from the rear end side of the piezoelectric element. The preload is applied by means of a screw engaging a screw thread provided on an inner surface of the diaphragm (see, for example, Patent Documents 1 to 3).
[Patent Document 1] Japanese Patent Application Laid-Open (*kokai*) No. H6-207875
[Patent Document 2] Japanese Utility-Model Application Laid-Open (*kokai*) No. H6-43538
[Patent Document 3] Japanese Utility-Model Application Laid-Open (*kokai*) No. H6-43539

EP 2 559 943 A1 discloses glow plug fitted with a combustion pressure detection sensor. The glow plug comprises a tubular housing including a support plate formed on a one-end side of the housing to have a lid-like shape; a diaphragm provided on an other-end side of the housing; a piezoelectric element which outputs an electrical signal corresponding to pressure received by the diaphragm; and a tubular shaped transmission section which transmits the pressure to the piezoelectric element and comprises a heating element of the glow plug.

US 2010/0037698 A1 and EP 2 866 013 A1 show further pressure sensors.

### 3. Problems to be solved by the Invention:

In the case where a preload is applied to the piezoelectric element by means of a screw as described above, in some cases, a preload cannot be accurately applied to the piezoelectric element due to, for example, a variation in the machining accuracy of the screw thread. Therefore, there has been a demand for a technique of improving the accuracy of the preload applied to the piezoelectric element.

### SUMMARY OF THE INVENTION

The present invention has been accomplished so as to solve the above-described problems, and an object of the present invention to provide a technique of improving the accuracy of a preload applied to a piezoelectric element and a pressure sensor embodying the technique.

The above object has been achieved by providing, in a first aspect, (1) a method of manufacturing a pressure sensor which comprises a tubular housing including a support plate formed on a one-end side of the housing to have a lid-like shape; a diaphragm provided on an other-end side of the housing; a piezoelectric element which outputs an electrical signal corresponding to pressure received by the diaphragm; and a rod-shaped transmission section which transmits the pressure to the piezoelectric element. The pressure sensor manufacturing method comprises an accommodation step of accommodating the piezoelectric element into the housing; and a transmission section fixing step of fixing the transmission section to the housing through the diaphragm in a state in which a predetermined preload is applied to the piezoelectric element in an axial direction of the housing by the piezoelectric element being pressed against the support plate by the transmission section.

. According to the pressure sensor manufacturing method (1) above, the transmission section is pushed in a direction toward one end of the housing from the other end thereof so as to press the piezoelectric element against the support plate formed at the one end of the housing, to thereby apply a preload to the piezoelectric element. Further, the transmission section is fixed to the housing in a state in which a predetermined load is applied to the piezoelectric element. Therefore, a preload can be accurately applied to the piezoelectric element.

In a preferred embodiment (2) of the pressure sensor manufacturing method (1) above, the diaphragm has a hole; and in the transmission section fixing step, after the diaphragm is fixed to the housing, the transmission section is fixed to the diaphragm in a state in which the predetermined preload is applied to the piezoelectric element by the transmission section inserted into the hole of the diaphragm. Since the diaphragm has a hole, a preload can be applied to the piezoelectric element in a state in which the diaphragm does not deform. Therefore, a preload can be accurately applied to the piezoelectric element.

In another preferred embodiment (3) of the pressure sensor manufacturing method (1) above, in the transmission section fixing step, the diaphragm is fixed to the housing in a state in which the predetermined preload is applied to the piezoelectric element by the transmission section fixed to the diaphragm. This makes it possible to apply a preload to the piezoelectric element in a state in which the diaphragm does not deform in both a structure in which the diaphragm has a hole and a structure in which the diaphragm has no hole. Therefore, a preload can be accurately applied to the piezoelectric element.

In yet another preferred embodiment (4) of the pressure sensor manufacturing method (2) above, the diaphragm of the pressure sensor has an annular first projecting portion provided around the hole and projecting toward the outside of the housing in a direction parallel to an axial line of the diaphragm; and in the transmission section fixing step, the transmission section is fixed to the first projecting portion of the diaphragm by means of laser welding, wherein a first incident angle θ1 of laser light for the laser welding with respect to an orthogonal line orthogonal to the axial line is set to satisfy a relation of -60° ≤ θ1 ≤ 60°. In this case, variation in the sensitivity of the pressure sensor can be suppressed.

In yet another preferred embodiment (5) of the pressure sensor manufacturing method (4) above, the first incident angle θ1 of laser light is 0°. In this case, variation in the sensitivity of the pressure sensor can be further suppressed.

In yet another preferred embodiment (6) of the pressure sensor manufacturing method of any of (1) to (5) above, the diaphragm of the pressure sensor has an annular second projecting portion provided along an outer periphery of the diaphragm and projecting toward the inside of the housing in a direction parallel to an axial line of the diaphragm; and in the transmission section fixing step, the second projecting portion of the diaphragm is fixed to a side surface of the housing by means of laser welding, wherein a second incident angle θ2 of laser light for the laser welding with respect to an orthogonal line orthogonal to the axial line is set to satisfy a relation of -60° ≤ θ2 ≤ 60°. In this case, variation in the sensitivity of the pressure sensor can be suppressed.

In yet another preferred embodiment (7) of the pressure sensor manufacturing method (6) above, the second incident angle θ2 of laser light is 0°. In this case, variation in the sensitivity of the pressure sensor can be further suppressed.

In yet another preferred embodiment (8), the pressure sensor manufacturing method of any of (1) to (7) above further comprises a cutting step of cutting, after the transmission section fixing step, at least a portion of the transmission section projecting from the diaphragm toward the outside of the housing. In this case, the length of the transmission section can be adjusted properly.

In a second aspect (9), the present invention provides a pressure sensor comprising a tubular housing including a support plate formed on a one-end side of the housing to have a lid-like shape; a lid-shaped diaphragm fixed to the other end of the housing; a piezoelectric element which is accommodated in the housing and outputs an electrical signal corresponding to pressure received by the diaphragm; and a rod-shaped transmission section which is fixed to the diaphragm, the rod-shaped transmission section being in contact with the piezoelectric element, and transmitting the pressure received by the diaphragm to the piezoelectric element, wherein the transmission section is fixed to the diaphragm in a state in which a predetermined preload is applied to the piezoelectric element by the transmission section. The pressure sensor of this mode has an improved pressure detection accuracy because a preload is accurately applied to the piezoelectric element.

In a preferred embodiment (10) of the pressure sensor (9)_ above, the diaphragm has a hole, and the transmission section is inserted into the hole of the diaphragm.

In another preferred embodiment (11) of the pressure sensor (10) above, the diaphragm has an annular first projecting portion provided around the hole and projecting toward the outside of the housing in a direction parallel to an axial line of the diaphragm; the transmission section is fixed to the first projecting portion of the diaphragm through a first joint portion which contains a metal constituting the diaphragm and a metal constituting the transmission section; and in a cross section of the diaphragm passing through the axial line, a first intersecting angle θc1 between an imaginary first average line and an imaginary orthogonal line orthogonal to the axial line satisfies a relation of -60° ≤ θc1 ≤ 60°, where the imaginary first average line is formed by a set of points each of which is equidistant from a first imaginary first border line which is one imaginary border line between the first joint portion and the diaphragm on the side toward the housing and a second imaginary first border line which is the other imaginary border line between the first joint portion and the diaphragm located on the side opposite the housing with respect to the first imaginary first border line. In this case, the pressure detection accuracy is further improved.

In yet another preferred embodiment (12) of the pressure sensor (11) above, the first intersecting angle θc1 is 0°. In this case, the pressure detection accuracy is further improved.

In yet another preferred embodiment (13) of the pressure sensor of any of (9) to (12) above, the diaphragm has an annular second projecting portion provided along an outer periphery of the diaphragm and projecting toward the housing in a direction parallel to an axial line of the diaphragm; and the diaphragm is fixed, at the second projecting portion, to a side surface of the housing through a second joint portion which contains a metal constituting the diaphragm and a metal constituting the housing. In this case as well, the pressure detection accuracy is improved.

In yet another preferred embodiment (14) of the pressure sensor (13) above, in a cross section of the diaphragm passing through the axial line, a second intersecting angle θc2 between an imaginary second average line La and an imaginary orthogonal line orthogonal to the axial line satisfies a relation of -60° ≤ θc2 ≤ 60°, where the imaginary first average line is formed by a set of points each of which is equidistant from a first imaginary second border line which is one imaginary border line between the second joint portion and the diaphragm on the side toward the housing and a second imaginary second border line which is the other imaginary border line between the second joint portion and the diaphragm located on the side opposite the housing with respect to the first imaginary second border line. In this case, the pressure detection accuracy is further improved.

In yet another preferred embodiment (15) of the pressure sensor (14) above, the second intersecting angle θc2 is 0°. In this case, the pressure detection accuracy is further improved.

The present invention can be realized in various embodiments other than those described above. For example, the present invention can be realized as a method of applying a preload to a piezoelectric element of a pressure sensor or a method of welding a transmission section of a pressure sensor.

### BRIEF DESCRIPTION OF THE DRAWINGS

FIG. 1 is an explanatory view which schematically shows the structure of a pressure sensor of a first embodiment.
FIG. 2 is a sectional view showing, on an enlarged scale, the structure of a forward end portion of the pressure sensor.
FIGS. 3A to 3C are perspective external views of members which constitute an element section.
FIGS. 4A and 4B are explanatory views showing the structure of a cable.
FIG. 5 is a flowchart showing a method of manufacturing the pressure sensor of the first embodiment.
FIG 6. is an explanatory view showing a housing, the element section, a diaphragm, and a transmission section prior to assembly.
FIG. 7 is an explanatory view showing a method of estimating the irradiation direction of laser light.
FIG. 8 is an explanatory view showing an example in which the incident angle θ1 of laser light is 0°.
FIG. 9 is an explanatory view showing an example in which the incident angle θ1 of laser light is -60°.
FIG. 10 is an explanatory graph showing the relation between the laser light incident angle and variation in the sensitivity of the pressure sensor.
FIG. 11 is a sectional view which schematically shows another example of the housing in the first embodiment.
FIG. 12 is a sectional view schematically showing, on an enlarged scale, a forward end portion of a pressure sensor of a second embodiment.
FIG. 13 is a flowchart showing a method of manufacturing the pressure sensor of the second embodiment.
FIG. 14 is a sectional view which schematically shows another example of the diaphragm in the second embodiment.
FIG. 15 is a sectional view schematically showing, on an enlarged scale, a forward end portion of a pressure sensor of a third embodiment.
FIG. 16 is a flowchart showing a method of manufacturing the pressure sensor of the third embodiment.
FIG. 17 is a sectional view schematically showing a diaphragm of a modification.

### Description of the Reference Numerals

Reference numerals used to identify various features in the drawings include the following.
- 5h:: hole
- 10, 10A, 10B, 10D:: pressure sensor
- 20:: first metallic member
- 21:: axial hole
- 22:: screw portion
- 24:: tool engagement portion
- 30, 30A, 30B:: housing
- 31:: housing axial hole
- 32:: support plate
- 34:: diameter increasing portion
- 36:: axial hole
- 37:: forward end surface
- 38:: recess
- 39:: thin wall portion
- 40, 40B, 40E:: diaphragm
- 41:: hole
- 42, 42C, 42D:: diaphragm main body
- 44:: first projecting portion
- 45, 45C:: second projecting portion
- 48:: diaphragm transmission section joined body
- 50:: element section
- 51:: piezoelectric element
- 52:: first packing
- 53:: electrode plate
- 54:: second packing
- 55:: insulating plate
- 56:: terminal portion
- 57:: disk portion
- 60:: cable
- 61:: jacket
- 62:: outer conductor
- 63:: conductive coating
- 64:: insulator
- 65:: inner conductor
- 72:: heat shrinkable tube
- 74:: small-diameter conductor wire
- 75:: plate conductor wire
- 76:: ground conductor wire
- 80:: transmission section
- 82:: transmission section main body
- 84:: projecting portion
- 90, 90D, 90E, 92, 92A, 92B, 92C:: joint portion

### DETAILED DESCRIPTION OF THE PREFERRED EMBODIMENTS

### A. First embodiment:

### A-1. Overall structure of pressure sensor:

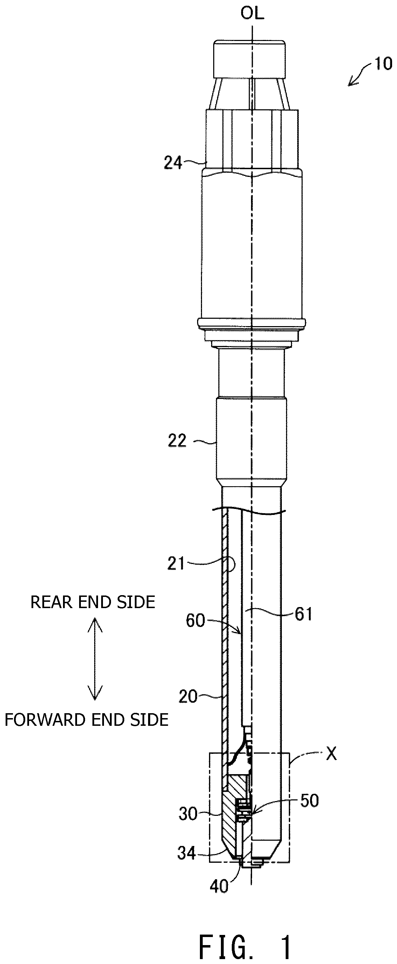

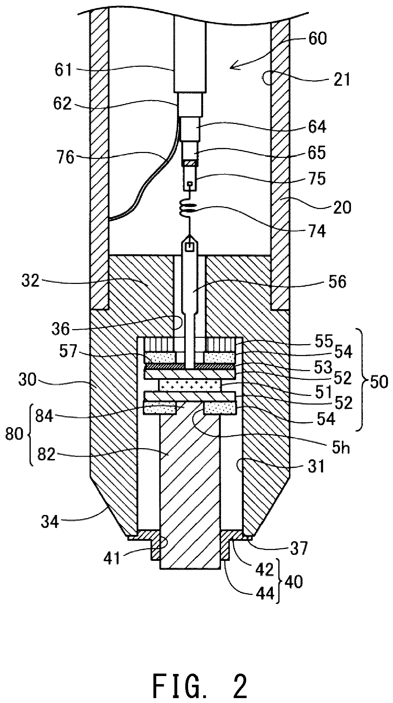

FIG. 1 is an explanatory view schematically showing the structure of a pressure sensor 10 which is a first embodiment of the present invention. The pressure sensor 10 of the present embodiment is attached to a cylinder head and is used to detect the pressure within a combustion chamber of an internal combustion engine. The pressure sensor 10 includes, as main components, a tubular metallic member 20, a housing 30, a diaphragm 40, an element section 50, a cable 60 and a transmission section 80 (see FIG 2). In the present specification, the side of the pressure sensor 10 where the diaphragm 40 is present will be referred to as the "forward end side" and the side opposite thereto in the direction of an axial line (center axis) OL of the pressure sensor 10 will be referred to as the "rear end side."

In FIG. 1, the external view of a portion of the pressure sensor 10 on the forward end side is shown on the right-hand side of the axial line OL, and the cross sectional view of that portion is shown on the left-hand side of the axial line OL. In the present embodiment, the axial line OL of the pressure sensor 10 coincides with the axial lines of the metallic member 20, the housing 30, the diaphragm 40, the transmission section 80 and the element section 50.

The metallic member 20, which has a tubular shape, has an annular cross section (hereinafter also referred to as a "transverse cross section") orthogonal to the axial line OL and extends in the direction of the axial line OL. The metallic member 20 has an axial hole 21 which is a through hole whose center coincides with the axial line OL. A screw portion 22 and a tool engagement portion 24 are provided on an outer peripheral surface of a rear end portion of the metallic member 20. The screw portion 22 has a screw thread for fixing the pressure sensor 10 to the cylinder head of the internal combustion engine. The tool engagement portion 24 has a peripheral shape suitable for engaging a tool (not shown) used for attaching and detaching the pressure sensor 10 (for example, the tool engagement portion 24 has a hexagonal transverse cross section). In the present embodiment, the metallic member 20 is formed of stainless steel. However, other types of steel such as low carbon steel may be used to form the metallic member 20.

FIG. 2 is a sectional view showing, on an enlarged scale, a forward end portion of the pressure sensor 10; specifically, a portion indicated as a region X in FIG. 1. The housing 30 is joined to the forward end of the metallic member 20. The housing 30 generally has the shape of a circular tube with a bottom. Specifically, a lid-shaped support plate 32 is formed at one end of the housing 30 on the rear end side, and a housing axial hole 31 is formed in the housing 30 such that its center coincides with the axial line OL. The support plate 32 has a through hole 36 whose center coincides with the axial line OL and which has a diameter smaller than the diameter of the housing axial hole 31 (the inner diameter of the housing 30). The housing 30 has, on its outer periphery, a diameter increasing portion 34 whose diameter increases from the forward end side toward the rear end side. When the pressure sensor is attached to the internal combustion engine, the pressure sensor 10 comes into gastight contact with the cylinder head of the internal combustion engine at the diameter increasing portion 34. In the present embodiment, like the metallic member 20, the housing 30 is formed of stainless steel. However, other types of steel such as low carbon steel may be used to form the housing. The "rear end side" of the housing 30 in the present embodiment corresponds to "a one-end side" of the housing in claims.

The diaphragm 40 includes a generally annular thin diaphragm main body 42 having a hole 41 and a first projecting portion 44 which is provided along the circumference of the hole 41, projects toward the forward end side (the outside of the housing 30) in a direction parallel to the axial line OL, and has an annular shape. The outer diameter of the diaphragm main body 42 is approximately equal to (slightly smaller than) the outer diameter of the forward end surface 37 of the housing 30. The diaphragm 40 is disposed such that the diaphragm main body 42 comes into contact with the forward end surface 37 of the housing 30 and closes the axial hole 31. The diaphragm 40 is joined to the housing 30 by means of laser welding. At the forwardmost end of the pressure sensor 10, the diaphragm 40 is exposed to the interior of a combustion chamber of the internal combustion engine, constitutes a pressure receiving surface, and deforms in proportion to the pressure within the combustion chamber. The greater the degree to which the thickness of the diaphragm main body 42 of the diaphragm 40 is decreased, the greater the ease of deformation of the diaphragm main body 42 and the higher the sensitivity of the pressure sensor 10.

The transmission section 80- has a generally circular columnar (rod-shaped) transmission section main body 82 whose diameter is approximately equal to the diameter of the hole 41 of the diaphragm 40, and a generally circular columnar projecting portion 84 which is smaller in diameter than the transmission section main body 82. The transmission section 80 is inserted into the hole 41 of the diaphragm 40 and is fixed to the housing 30 through the diaphragm 40 as described below. In this fixed state, the projecting portion 84 of the transmission section 80 is fitted into the hole 5h of the second packing 54, and a predetermined preload is applied from the transmission section 80 to the piezoelectric element 51. Namely, the transmission section 80 is fixed to the diaphragm 40 and is in contact with the piezoelectric element 51 through a first packing 52. The transmission section 80 displaces as a result of deformation of the diaphragm 40 and transmits to the element section 50 on the rear end side a load produced as a result of receiving the pressure imparted by the diaphragm 40. The greater the thickness (the diameter) of the transmission section 80, the greater the ease of transmission of the pressure received by the diaphragm 40 to the rear end side and the higher the sensitivity of the pressure sensor 10. In the present embodiment, the diaphragm 40 and the transmission section 80 are formed of stainless steel. However, a different metal may be used to form the diaphragm 40 and the transmission section 80.

The element section 50 is composed of the piezoelectric element 51, an electrode plate 53, an insulating plate 55, two first packings 52 and two second packings 54. As shown in FIG. 2, in the element section 50, one of the second packings 54, one of the first packings 52, the piezoelectric element 51, the other first packing 52, the electrode plate 53, the other second packing 54 and the insulating plate 55 are stacked in this order from the forward end side toward the rear end side. The element section 50 outputs a charge corresponding to the pressure received by the diaphragm 40. The components of the element section 50 will be described in detail below.

The cable 60 is disposed in the axial hole 21 of the metallic member 20 and is connected to a terminal portion 56 of the electrode plate 53. The cable 60 transfers the charge of the piezoelectric element 51 to an integrated circuit (not shown) which detects the combustion pressure of the internal combustion engine based on the charge of the piezoelectric element 51. Notably, in FIG. 2, the external view of the cable 60 is shown instead of its cross section. The cable 60 will be described in detail below.

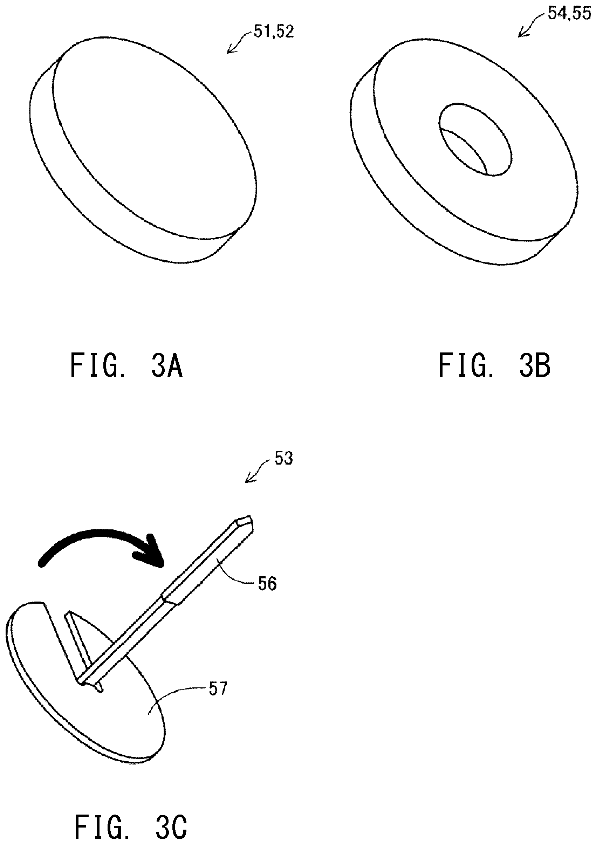

FIGS. 3A to 3C are perspective external views of members which constitute the element section 50. As shown in FIG. 3A, each of the piezoelectric element 51 and the first packing 52 is a disk-shaped plate member. The piezoelectric element 51 converts the load transmitted from the transmission section 80 to a charge and outputs a signal (voltage signal) corresponding to the deformation amount of the diaphragm 40. In the present embodiment, the piezoelectric element 51 is formed of quartz crystal. However, an element formed of a material of a different type may be used. The first packing 52 on the rear end side transfers the charge produced at the piezoelectric element 51.

As shown in FIG. 3B, each of the second packings 54 and the insulating plate 55 is an annular plate member. The insulating plate 55 provides insulation between the electrode plate 53 and the support plate 32. In the present embodiment, the insulating plate 55 is formed of alumina. However, an insulating material of a different type may be used to form the insulating plate 55. The two second packings 54 are disposed on the rear end side and forward end side of the piezoelectric element 51 so as to make the load applied to the piezoelectric element 51 uniform (FIG. 2). In the present embodiment, the first packings 52 and the second packings 54 are formed of stainless steel. However, a metal of a different type may be used to form the first packings 52 and the second packings 54.

As shown in FIG. 3C, the electrode plate 53 has a disk portion 57 which is a generally disk-shaped plate member and a terminal portion 56 extending vertically from a generally circular surface of the disk portion 57. The electrode plate 53 can be manufactured by punching, from a flat plate of stainless steel, an intermediate having a shape obtained by combining the shapes of the disk portion 57 and the terminal portion 56 and bending a portion of the intermediate which is to become the terminal portion 56. In the present embodiment, the electrode plate 53 is formed of stainless steel. However, a metal of a different type may be used to form the electrode plate 53.

As shown in FIG. 2, the electrode plate 53 is disposed in the housing axial hole 31 of the housing 30 so that the disk portion 57 comes into surface contact with the first packing 52 on the rear end side, and the terminal portion 56 extends toward the rear end side. The terminal portion 56 extends through the central holes of the rear-end-side second packing 54 and the insulating plate 55 such that the terminal portion 56 does not come into contact with the second packing 54 disposed on the rear end side of the electrode plate 53. Also, the terminal portion 56 extends through the axial hole 36 of the support plate 32 in a state in which the terminal portion 56 is spaced from the inner wall surface of the axial hole 36. Further, the members which constitute the element section 50 are disposed in the axial hole 31 of the housing 30 such that they are spaced from the inner wall surface of the housing 30. As a result, the charge on the rear end surface of the piezoelectric element 51 is transferred to the rear end side through the terminal portion 56 of the electrode plate 53 without flowing to a short-circuit.

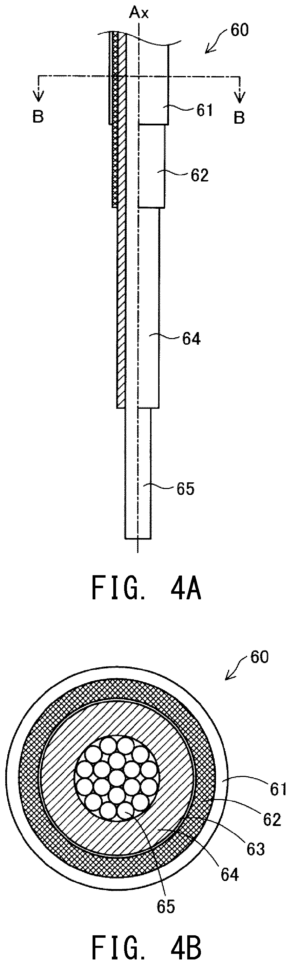

FIGS. 4A and 4B are explanatory views showing the structure of the cable 60. In the present embodiment, a so-called shielded cable having a multi-layer structure is used as the cable 60 so as to reduce noise. In FIG. 4A, the external view of the cable 60 is shown on the right-hand side of the center axis Ax of the cable 60, and its cross section is shown on the left-hand side of the center axis Ax. FIG. 4B shows a cross section of the cable 60 taken along line B-B in FIG. 4A. The cable 60 has the following structure. An inner conductor 65 including a plurality of conductor wires is disposed at the center, and an insulator 64 surrounds the radially outer side of the inner conductor 65. A conductive coating 63 is provided on the outer peripheral surface of the insulator 64, and an outer conductor 62 which is a mesh shield is provided on the radially outer side of the conductive coating 63. The outer surface of the outer conductor 62 is covered with a jacket 61.

As shown in FIG. 4A, at the forward end of the cable 60, a portion of the outer conductor 62 which is not covered with the jacket 61 is exposed (extends) toward the forward end side from the jacket 61. Also, a portion of the insulator 64 which is not covered with the outer conductor 62 is exposed (extends) toward the forward end side from the outer conductor 62. Further, a portion of the inner conductor 65 which is not covered with the insulator 64 is exposed (extends) toward the forward end side from the insulator 64.

As shown in FIG. 2, the inner conductor 65 exposed at the forward end of the cable 60 is connected to the terminal portion 56 through a small-diameter conductor wire 74 and a plate conductor wire 75. Specifically, the plate conductor wire 75 is welded to the forward end of the inner conductor 65, the rear end of the small-diameter conductor wire 74 wound into the shape of a coil is welded to the forward end of the plate conductor wire 75, and the forward end of the small-diameter conductor wire 74 is welded to the rear end portion of the terminal portion 56. The plate conductor wire 75 has a width that is smaller than the diameter of the inner conductor 65 and larger than the diameter of the small-diameter conductor wire 74. The plate conductor wire 75 has a volume smaller than that of the inner conductor 65 and larger than that of the small-diameter conductor wire 74. This allows the transmission of the charge of the piezoelectric element 51 to the inner conductor 65 through the terminal portion 56.

Notably, a region which extends from the forward end of the terminal portion 56 to a position on the rear end side of a welded portion where the terminal portion 56 and the small-diameter conductor wire 74, are connected together; i.e., a region including the entirety of the terminal portion 56 and a forward end portion of the small-diameter conductor wire 74 may be covered with a heat shrinkable tube. This increases the reliability of the electrical insulation between the terminal portion 56 and the support plate 32. In this case, when the pressure sensor 10 is manufactured, the operation of integrating the small-diameter conductor wire 74 and the electrode plate 53 having the terminal portion 56 through welding and the operation of covering them with the heat shrinkable tube are performed prior to assembling the entirety of the pressure sensor 10.

Also, the cable 60 has a ground conductor wire 76 which is formed of a stranded conductor and is continuous with the outer conductor 62 such that the ground conductor wire 76 extends further toward the forward end side from the forward end of the outer conductor 62. A forward end portion of the ground conductor wire 76 is welded to the inner circumferential surface of the metallic member 20. As a result, the outer conductor 62 is grounded through the ground conductor wire 76, the metallic member 20, the housing 30, and the cylinder head of the internal combustion engine.

### A-2. Method of manufacturing the pressure sensor:

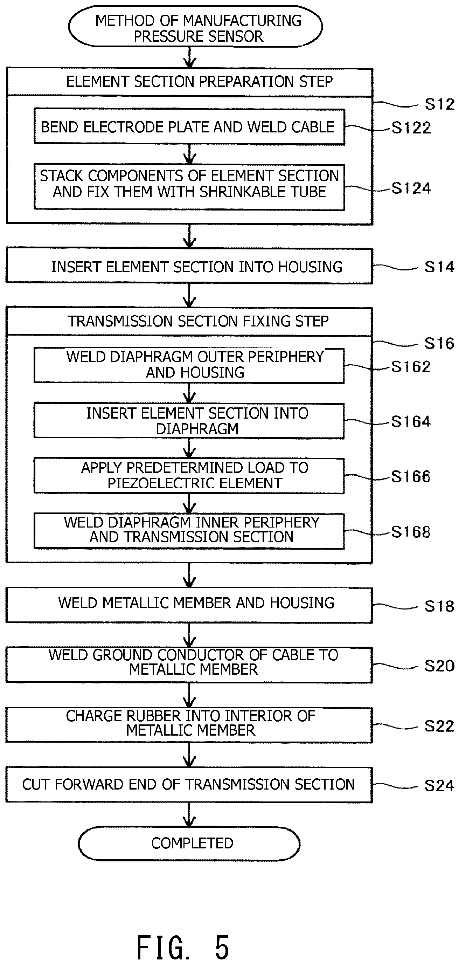

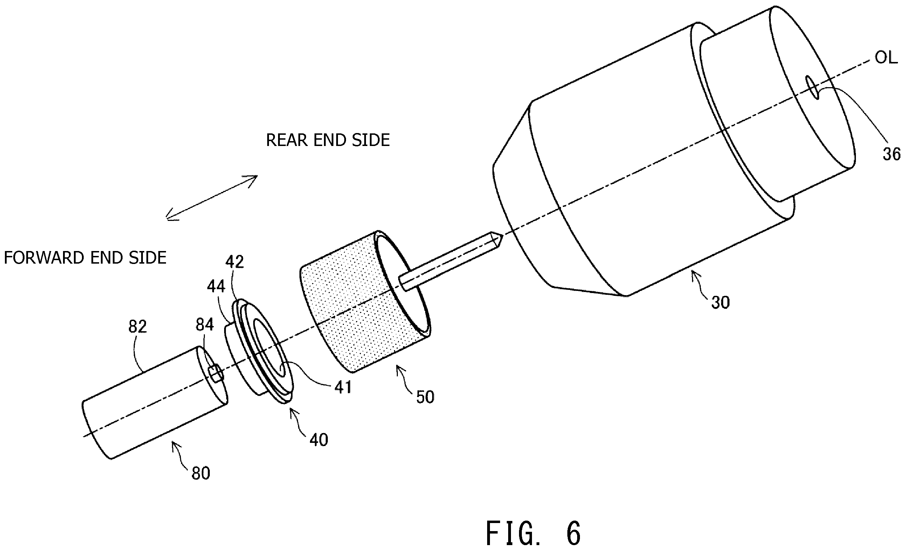

FIG. 5 is a flowchart showing a method of manufacturing the pressure sensor 10 of the first embodiment. FIG. 6 is an explanatory view showing the housing 30, the element section 50, the diaphragm 40 and the transmission section 80 prior to assembly.

As shown in FIG. 5, first, in a step S12 of preparing the element section 50, the terminal portion 56 of the electrode plate 53 is bent and the cable 60 is welded thereto (step S122); and the components of the element section 50 (the piezoelectric element 51, the electrode plate 53, the insulating plate 55, the two first packings 52 and the two second packings 54) are stacked and fixed by the heat shrinkable tube (step S124). Next, the element section 50 (FIG. 6) fixed in step S124 is inserted into the housing 30 (FIG. 6) (step S14), and a transmission section fixing step S16 is performed.

In the transmission section fixing step S16, the outer periphery of the diaphragm 40 (FIG. 6) and the housing 30 are welded together, whereby the diaphragm 40 is fixed to the housing 30 (step S162). After that, the transmission section 80 (FIG. 6) is inserted into the hole 41 of the diaphragm 40 (step S164), and the transmission section 80 is pushed with a predetermined load from the forward end side of the housing 30 so as to press the piezoelectric element 51 against the support plate 32, to thereby apply a predetermined preload to the piezoelectric element 51 (step S166). The preload applied to the piezoelectric element 51 is adjusted based on the charge generated by the piezoelectric element 51. In a state in which the predetermined preload is applied to the piezoelectric element 51, the first projecting portion 44 of the diaphragm 40 and the transmission section 80 are welded together (step S168). As a result of performing the transmission section fixing step S16, the transmission section 80 is fixed to the housing 30 through the diaphragm 40, whereby the state in which the predetermined preload is applied to the piezoelectric element 51 is maintained.

After that, the metallic member 20 and the housing 30 are welded together (step S18), and the ground conductor wire 76 of the cable 60 is welded to the metallic member 20 (step S20). Subsequently, molten rubber is charged into the interior of the metallic member 20 to thereby form a rubber layer (not shown) (step S22). The rubber layer formed inside the metallic member 20 improves the moisture resistance and vibration damping performance of the pressure sensor 10. Notably, instead of the molten rubber, molten resin may be charged into the interior of the metallic member 20. Finally, the forward end of the transmission section 80 is cut such that a projecting portion of the transmission section 80 has a predetermined length (FIG. 2) (step S24), whereby the pressure sensor 10 is completed. In the completed pressure sensor 10, since the preload is applied to the piezoelectric element 51, the thickness of the piezoelectric element 51 is smaller than that prior to assembly.

In the present embodiment, a member which is to become the transmission section 80 and is longer than the completed product of the transmission section 80 is prepared, and the member is cut in the above-described cutting step (step S24) such that a portion of the transmission section 80 projecting from the diaphragm 40 has a predetermined length. In the case where a preload is applied to the piezoelectric element 51 by the transmission section 80 from the forward end side of the pressure sensor 10, the length of the portion of the transmission section 80 projecting from the diaphragm 40 may vary due to, for example, variations in the dimensions of the members which constitute the element section 50. Since the method of manufacturing the pressure sensor 10 according to the present embodiment has the cutting step (step S24), it is possible to suppress the variation in the length of the portion of the transmission section 80 projecting from the diaphragm 40. Notably, in other embodiments, at least one of the above-described step S22 and step S24 may be omitted.

According to the method of manufacturing the pressure sensor 10 of the present embodiment, a preload is applied to the piezoelectric element 51 by the transmission section 80 from the forward end side of the housing 30, and the transmission section 80 is fixed to the housing 30 through the diaphragm 40 to thereby maintain the applied preload. Therefore, a preload can be applied accurately as compared with the case where a preload is applied to the piezoelectric element 51 by a screw from the rear end side of the housing 30. Also, the rigid support plate 32 is formed on the rear end side of the housing 30. Therefore, when the piezoelectric element 51 is pressed against the support plate 32 by the transmission section 80 so as to apply a preload to the piezoelectric element 51, the support plate 32 does not deform due to the load from the transmission section 80, whereby a preload can be accurately applied to the piezoelectric element.

The metallic member 20 and the housing 30 are laser-welded together, the housing 30 and the diaphragm 40 are laser-welded together, and the diaphragm 40 and the transmission section 80 are laser-welded together. A YAG laser or a carbon dioxide laser may be used as a laser light source for the laser welding. Any type of a laser may be used so long as it can apply laser light to the housing 30 at a desired angle.

### A-3. Laser welding between the diaphragm and the transmission section:

In the present embodiment, the welding between the diaphragm 40 and the transmission section 80 is performed by applying laser light to the first projecting portion 44 over the entire circumference thereof. The joint portion formed when the material of the diaphragm 40 and the material of the transmission section 80 are melted and mixed as a result of the application of laser light has an annular shape. Similarly, the welding between the diaphragm 40 and the housing 30 is performed by applying laser light to the diaphragm main body 42 over the entire circumference thereof, and the joint portion has an annular shape. As a result, the airtightness within the housing 30 is secured. The oscillation method used for the laser welding may be either a pulsed laser method of intermittently radiating laser light and a CW laser method of continuously radiating laser light, so long as the method that is employed can form the joint portion continuously in an annular shape to thereby secure the airtightness within the housing 30. Now, the irradiation direction of laser light will be described by taking the joint portion between the diaphragm 40 and the transmission section 80 as an example.

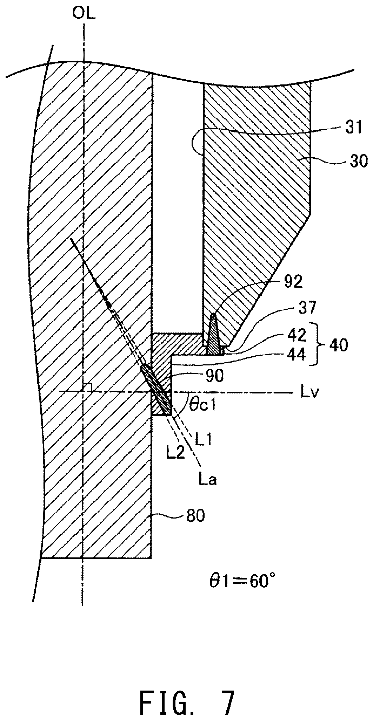

FIG. 7 is an explanatory view showing a method of estimating the irradiation direction of laser light. FIG. 7 shows, on an enlarged scale, a portion of a cross section of the pressure sensor 10 passing through the axial line OL, the portion being located near the joint portion 90. In the following description, a straight imaginary border line which approximates a rear-end-side border of the borders between the joint portion 90 and the diaphragm 40 shown in FIG. 7 will be referred to as a border line L1, and a straight imaginary border line which approximates a forward-end-side border of the borders will be referred to as a border line L2. An imaginary straight line formed by a set of points each of which is equidistant from the border line L1 and the border line L2 will be referred to as an average line La, and an imaginary orthogonal line orthogonal to the axial line OL will be referred to as an orthogonal line Lv. In FIG. 7, an angle θc1 between the average line La and the orthogonal line Lv is considered to approximately coincide with the irradiation direction (incident angle θ1) of laser light. Therefore, the angle θc1 between the average line La of the joint portion 90 and the orthogonal line Lv can be presumed to correspond to the incident angle θ1 of laser light. In the present embodiment, the incident angle θ1 of laser light preferably falls within a range of -60° to 60° (i.e., -60° ≤ θ1 ≤ 60°). The reason why this range is selected will be explained below. Notably, in the present specification, an angle in the clockwise direction with respect to the orthogonal line Lv (reference) in FIG. 7 will be referred as a "positive angle," and an angle in the counterclockwise direction with respect to the orthogonal line Lv will be referred as a "negative angle." FIG. 7 shows an example in which the laser light incident angle θ1 is 60°. In the case where the laser light incident angle θ1 is a positive angle, the joint portion 90 has a cross section convex toward the rear end side. The "border line L1" in the present embodiment corresponds to the "first imaginary first border line" of the invention; the "border line L2" in the present embodiment corresponds to the "second imaginary first border line" of the invention; the "average line La" in the present embodiment corresponds to the "imaginary first average line" of the invention; the "orthogonal line Lv" in the present embodiment corresponds to the "imaginary orthogonal line" of the invention; and the "angle θ1" in the present embodiment corresponds to the "first intersecting angle θc1" of the invention.

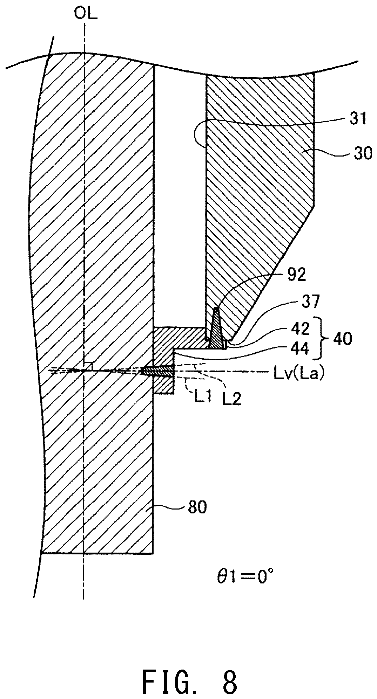

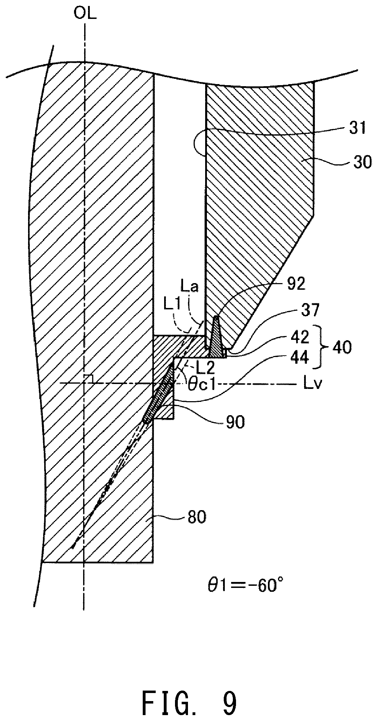

FIG. 8 is an explanatory view showing an example in which the laser light incident angle θ1 is 0°, and FIG. 9 is an explanatory view showing an example in which the laser light incident angle θ1 is -60°. In the case where the laser light incident angle θ1 is 0° as shown in FIG. 8, the average line La coincides with the orthogonal line Lv, and the angle θc1 between the average line La and the orthogonal line Lv becomes 0°. In this case, the irradiation direction of laser light is orthogonal to the axial line OL. In the case where the laser light incident angle θ1 is a negative angle as shown in FIG. 9, the joint portion 90 has a cross section that is convex toward the forward end side.

The following test was carried out so as to investigate the relationship between the laser light incident angle θ1 at the time of laser welding of the diaphragm 40 and the transmission section 80, as well as variation in the sensitivity of the pressure sensor 10.

### Samples

Nine types of pressure sensors (samples 1 to 9) having the same structure as the pressure sensor 10 were manufactured while the laser light incident angle θ1 was set to 0°, 10°, 20°, 30°, 40°, 50°, 60°, 70° and 80°, respectively. For each type (each sample), 10 pressure sensors were manufactured.

### Test Method

Each pressure sensor of each sample was attached inside a pressure chamber at room temperature (25°C), and pressurization (2 MPa) and depressurization (0 MPa) were repeated 10 times. A variation in sensitivity was determined based on the output voltage at the time of pressurization. The variation in sensitivity was calculated by the following expression.

Sensitivity variation (%) = [(the output voltage maximum value - the output voltage minimum value)/the output voltage average value] × 100 (Expression 1)

The output voltage maximum value, the output voltage minimum value, and the output voltage average value in Expression (1) are the respective averages of the output voltage maximum values, the output voltage minimum values, and the output voltage average values obtained from the output values during the 10 pressurization cycles.

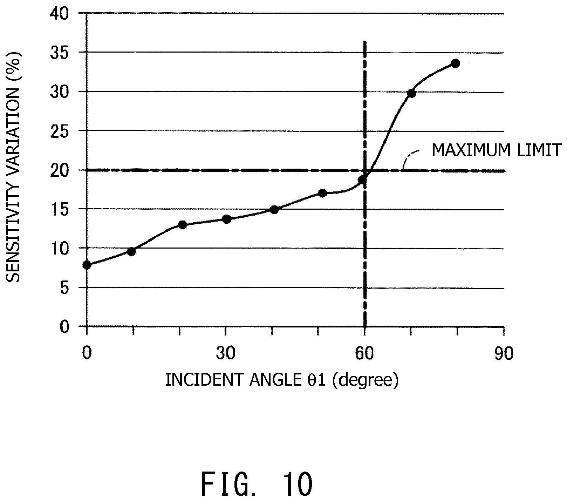

FIG. 10 is an explanatory graph showing the relationship between the laser light incident angle employed for the laser welding and the variation in the sensitivity of the pressure sensor 10. In the case where the pressure sensor 10 of the present embodiment is used, in general, the sensitivity variation must be equal to or less than 20% (the target), for the following reason. In the case where the sensitivity variation is 20% or less, the detection error can be suppressed to ±5% or less by correction performed in an integrated circuit (not shown) for detecting the combustion pressure of the internal combustion engine based on the charge of the piezoelectric element 51. As can be seen from FIG. 10, in order to limit the sensitivity variation to 20% or less, the laser light incident angle θ1 must be set to fall within the range of 0° to 60°. Similarly, samples were manufactured while the laser light incident angle θ1 was changed within the range of -60° to 0° at intervals of 10°, and a test similar to the above-described test was carried out. A graph representing the results of the test is a mirror image of the graph of FIG. 10 with respect to the vertical axis (a point where the laser light incident angle θ1 = 0°). The results of these tests show that the laser light incident angle θ1 is preferably set to fall within the range of -60° to 60°. This is because when the laser light incident angle θ1 falls within the range of -60° to 60°, the variation in the sensitivity of the pressure sensor 10 can be limited to 20% or less. Further, it is more preferred to set the laser light incident angle θ1 to 0°. This is because when the laser light incident angle θ1 is 0°, the variation in the sensitivity of the pressure sensor 10 can be reduced to 10% or less.

Notably, in the present embodiment, the laser light incident angle employed when the diaphragm 40 and the housing 30 are welded together is about 0° (the irradiation direction of laser light is orthogonal to the surface of the diaphragm main body 42 of the diaphragm 40 on the forward end side. In other words, the irradiation direction of laser light is parallel to the axial line OL.) (FIG. 7).

### • Different Example 1:

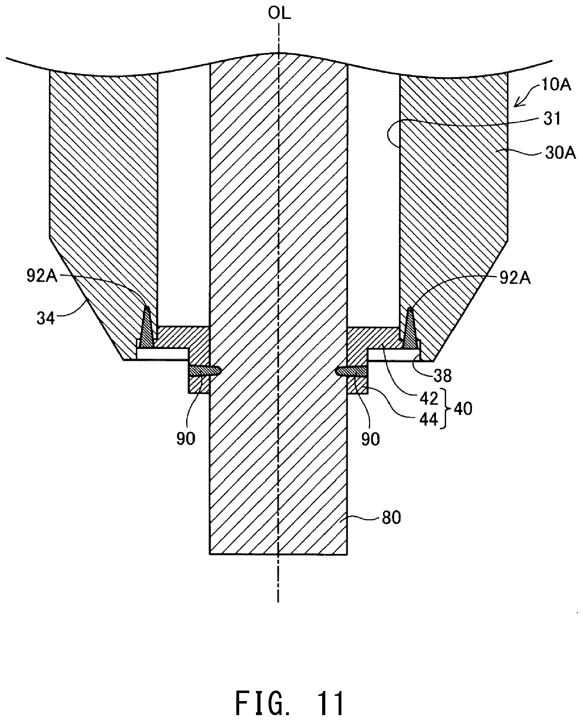

FIG. 11 is a sectional view schematically showing another example of the housing in the first embodiment. FIG. 11 shows, on an enlarged scale, a portion of a pressure sensor 10A on the forward end side. The housing 30A of this example has a recess 38 whose diameter is approximately equal to the outer diameter of the diaphragm main body 42 of the diaphragm 40. In this example, the diaphragm main body 42 is fitted into the recess 38 of the housing 30A, and the diaphragm 40 is then joined to the housing 30A. In this case as well, the pressure sensor 10A can be manufactured by the pressure sensor manufacturing method described above, and a preload can be accurately applied to the piezoelectric element 51.

### B. Second Embodiment:

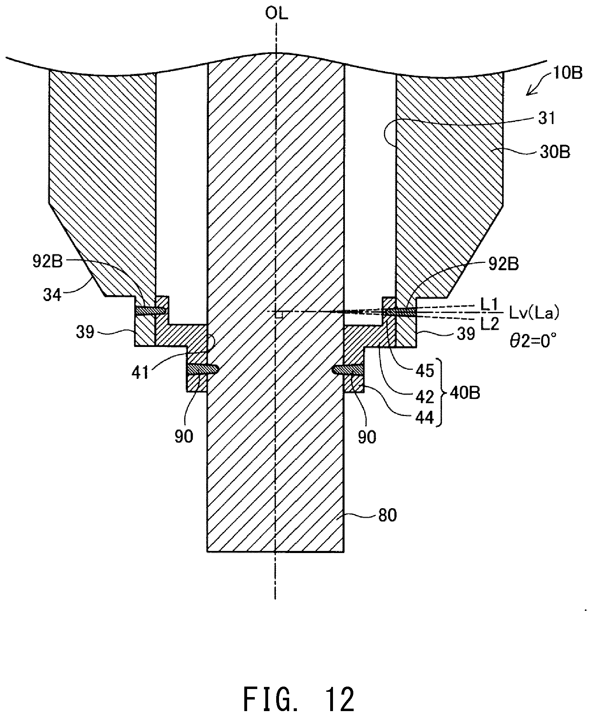

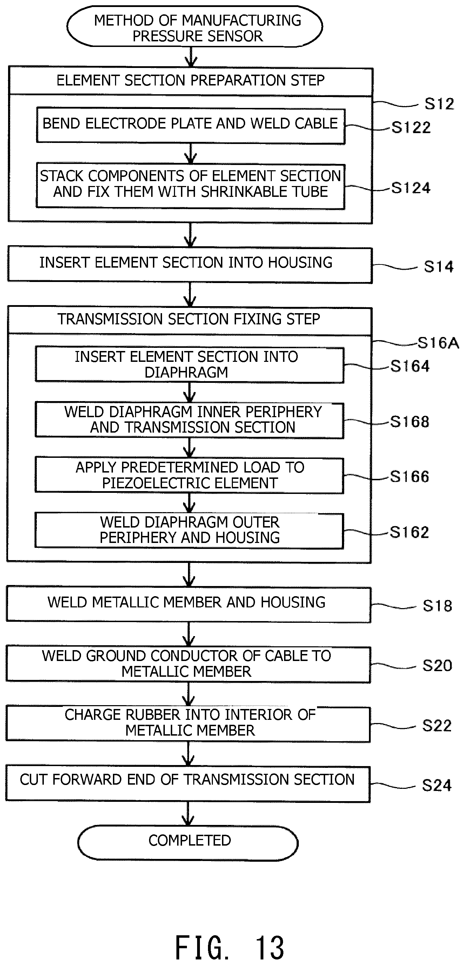

FIG. 12 is a sectional view showing, on an enlarged scale, a forward end portion of a pressure sensor 10B which is a second embodiment of the present invention. FIG. 13 is a flowchart showing a method of manufacturing the pressure sensor 10B of the second embodiment. The pressure sensor 10B of the second embodiment differs from the pressure sensor 10 of the first embodiment in the manufacturing method, the shape of the forward end portion of the housing, and the shape of the diaphragm. The steps and structural components which are the same as those of the first embodiment are denoted by the same reference numerals, and their descriptions will be omitted.

As shown in FIG. 12, the housing 30B has a thin wall portion 39 formed on the forward end side. The diaphragm 40B has an annular second projecting portion 45 which is provided along the outer periphery of the diaphragm main body 42 and projects toward the inside of the housing 30B in a direction parallel to the direction of the axial line OL. In other words, the second projecting portion 45 is formed such that it projects from the diaphragm main body 42 toward the rear end side. In the second embodiment, the outer diameter of the diaphragm main body 42 of the diaphragm 40 is approximately equal to the inner diameter of the housing 30B, and the second projecting portion 45 of the diaphragm 40 is in contact with the inner side surface of the housing 30B. As described below, the second projecting portion 45 of the diaphragm 40 is joined to the inner side surface of the housing 30B by means of laser welding, whereby the diaphragm 40 is fixed to the housing 30B.

In the present embodiment, the laser light incident angle θ2 employed when the second projecting portion 45 of the diaphragm 40B is laser-welded to the housing 30B is preferably set to fall within the range of -60° to 60° (i.e., -60° ≤ θ2 ≤ 60°). When the laser light incident angle θ2 is set as described above, as in the case of the joint portion 90 in the first embodiment, the variation in the sensitivity of the pressure sensor 10B can be suppressed. Notably, the laser light incident angle θ2 can be estimated by a method similar to the method described in the first embodiment. In the following description, a straight imaginary border line which approximates a rear-end-side border of the borders between a joint portion 92B and the diaphragm 40B shown in FIG. 12 will be referred to as a border line L1, and a straight imaginary border line which approximates a forward-end-side border of the borders will be referred to as a border line L2. An imaginary straight line formed by a set of points each of which is equidistant from the border line L1 and the border line L2 will be referred to as an average line La, and an imaginary orthogonal line orthogonal to the axial line OL will be referred to as an orthogonal line Lv. In FIG. 12, an angle θc2 between the average line La and the orthogonal line Lv corresponds to the laser light irradiation incident angle θ2. FIG. 12 shows an example in which the laser light irradiation incident angle θ2 is 0°. The "border line L1" in the present embodiment corresponds to the "first imaginary second border line" of the invention; the "border line L2" in the present embodiment corresponds to the "second imaginary second border line" of the invention; the "average line La" in the present embodiment corresponds to the "imaginary second average line" of the invention; the "orthogonal line Lv" in the present embodiment corresponds to the "imaginary orthogonal line" of the invention; and the "angle θc2" in the present embodiment corresponds to the "second intersecting angle θc2" of the invention.

As shown in FIG. 13, the method of manufacturing the pressure sensor 10B of the second embodiment is the same as the above-describe manufacturing method of the first embodiment, except that the order of the sub-steps (steps S162 to S168) in the transmission section fixing step (step S16A of FIG. 13) differs from that in the manufacturing method of the first embodiment. In the transmission section fixing step S16A, first, the transmission section 80 is inserted into the hole 41 of the diaphragm 40B (step S164), and the first projecting portion 44 of the diaphragm 40B and the transmission section 80 are welded to each other, whereby the transmission section 80 is fixed to the diaphragm 40B (step S168). The transmission section 80, which has been fixed to the diaphragm 40B and united therewith, is pushed with a predetermined load from the forward end side of the housing 30B so as to press the piezoelectric element 51 against the support plate 32, to thereby apply a predetermined preload to the piezoelectric element 51 (step S166). Notably, as in the first embodiment, the preload applied to the piezoelectric element 51 is adjusted based on the charge generated by the piezoelectric element 51. In a state in which the predetermined preload is applied to the piezoelectric element 51, the second projecting portion 45 of the diaphragm 40B and the housing 30B are welded together, whereby the diaphragm 40B is fixed to the housing 30B (step S162).

In the first embodiment, the diaphragm 40 and the housing 30 are first fixed to each other, a preload is applied to the piezoelectric element 51 by the transmission section 80, and the transmission section 80 and the diaphragm 40 are then fixed to each other. In contrast, in the second embodiment, the diaphragm 40 and the transmission section 80 are first fixed to each other, a preload is applied to the piezoelectric element 51 by the transmission section 80, and the diaphragm 40 and the housing 30B are then fixed to each other. Namely, the first embodiment and the second embodiment differ from each other in the order of the sub-steps (in the transmission section fixing step) for fixing the transmission section 80 to the housing 30 through the diaphragm 40 in a state in which a preload is applied to the piezoelectric element 51 by the transmission section 80. Like the manufacturing method of the first embodiment, the method of manufacturing the pressure sensor 10B of the second embodiment can accurately apply a preload to the piezoelectric element 51.

For example, in the case of the shapes of the housing 30 and the diaphragm 40 of the first embodiment (FIG. 2), if the transmission section 80 is moved toward the rear end side of the pressure sensor 10 so as to apply a preload to the piezoelectric element 51 by the transmission section 80 in a state in which the transmission section 80 and the diaphragm 40 are fixed to each other, since the diaphragm main body 42 butts against the forward end of the housing 30, there is a possibility that a predetermined preload cannot be applied to the piezoelectric element 51 in a state in which the diaphragm main body 42 does not deform. In contrast, in the pressure sensor 10B of the present embodiment, since the outer diameter of the diaphragm main body 42 of the diaphragm 40B is approximately equal to the inner diameter of the housing 30B, the diaphragm 40B can be inserted into the housing 30B (the housing axial hole 31). Therefore, in the case where a preload is applied to the piezoelectric element 51 by the transmission section 80 in a state in which the transmission section 80 and the diaphragm 40B are fixed to each other, the diaphragm 40B can move within the housing 30B in the direction of the axial line OL, and a predetermined preload can be applied to the piezoelectric element 51.

Also, the housing 30B has the thin wall portion 39 on the forward end side, and the housing 30B and the diaphragm 40B are fixed to each other by joining the second projecting portion 45 of the diaphragm 40B and the thin wall portion 39 by means of laser welding. Therefore, as compared with the case where the thin wall portion 39 is not provided (for example, the housing 30 or 30A of the first embodiment), the the housing 30B and the diaphragm 40B can be easily joined to each other by means of laser welding.

In the example shown in FIG. 13, in the transmission section fixing step (step S16A), the transmission section 80 is inserted through the diaphragm 40B (step S164), and the transmission section 80 is then fixed to the diaphragm 40B (step S168). However, the step S164 and the step S168 may be performed before the transmission section fixing step. For example, the step S164 and the step S168 may be performed before the preparation step (step S12). Also, a subassembly composed of the diaphragm 40B and the transmission section 80 inserted through and fixed to the diaphragm 40B in advance may be prepared. In this case, the step S166 is carried out by use of the transmission section 80 fixed to the diaphragm 40B.

### • Different Example 2:

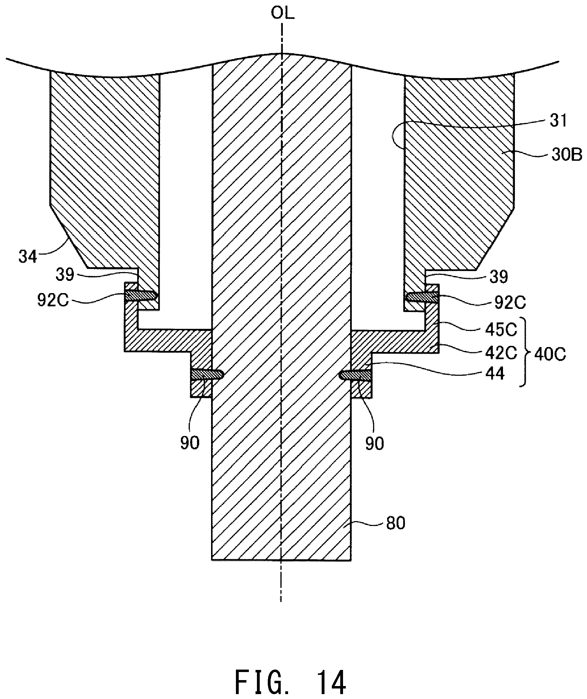

FIG. 14 is a sectional view schematically showing another example of the diaphragm in the second embodiment. The diaphragm 40C of this example is configured such that the outer diameter of the diaphragm main body 42C is greater than the inner diameter of the housing 30B, and the inner diameter of the second projecting portion 45C is approximately equal to the outer diameter of the thin wall portion 39 of the housing 30B. Therefore, the diaphragm 40C is disposed on the forward end side of the housing 30B in such a manner that the diaphragm 40C closes the axial hole 31. Even in the case where such a structure is employed, as in the example of FIG. 12, the diaphragm 40C can move within the housing 30B in the direction of the axial line OL when a preload is applied to the piezoelectric element 51 by the transmission section 80 in a state in which the transmission section 80 and the diaphragm 40C are fixed to each other, and a predetermined preload can be applied to the piezoelectric element 51.

### C. Third Embodiment:

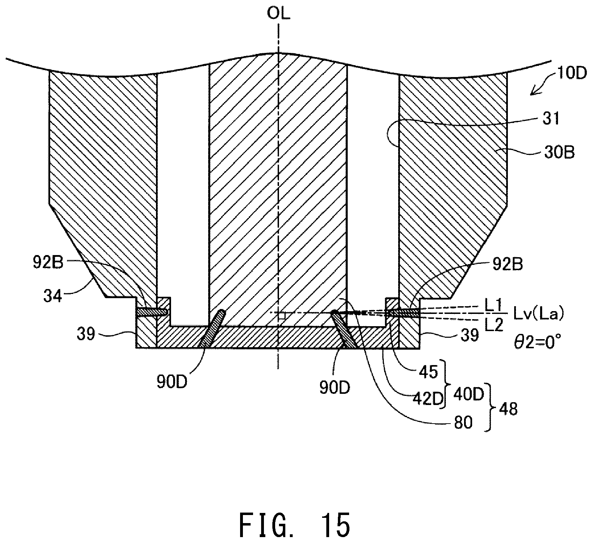

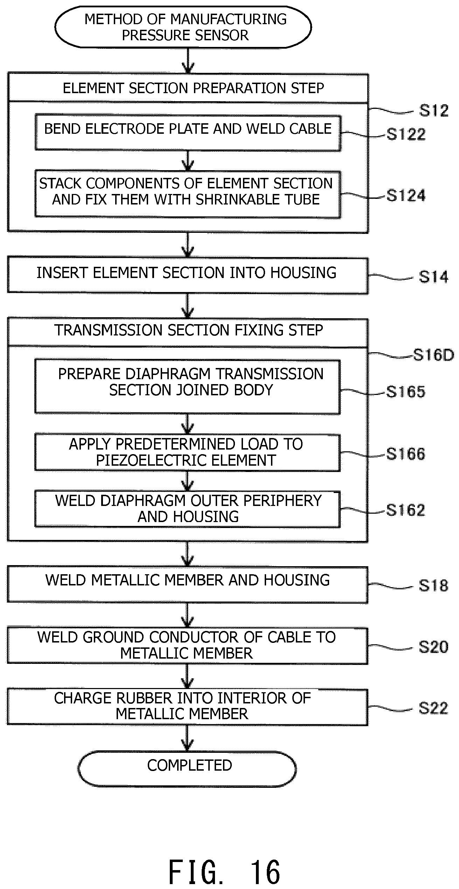

FIG. 15 is a sectional view showing, on an enlarged scale, a forward end portion of a pressure sensor 10D which is a third embodiment of the present invention. FIG. 16 is a flowchart showing a method of manufacturing the pressure sensor 10D of the third embodiment. The pressure sensor 10D of the third embodiment differs from the pressure sensors of the first and second embodiments in the point that the diaphragm 40D of the pressure sensor 10D has no hole. Namely, whereas the diaphragm main bodies 42, 42C of the diaphragms 40, 40B and 40C of the first and second embodiments each have an approximately annular shape, the diaphragm main body 42D of the diaphragm 40D of the third embodiment has no hole and generally has a disk-like shape. Since the diaphragm 40D of the pressure sensor 10D of the third embodiment has no hole, the method of manufacturing the pressure sensor 10D differs from the manufacturing methods of the first and second embodiments. The structural components of the pressure sensor 10D of the third embodiment which are the same as those of the pressure sensor of the second embodiment are denoted by the same reference numerals, and their descriptions will be omitted. Similarly, the steps of the manufacturing method of the third embodiment which are the same as those of the manufacturing method of the second embodiment are denoted by the same reference numerals, and their descriptions will be omitted.

As shown in FIG. 15, the diaphragm 40D has a diaphragm main body 42D and a second projecting portion 45. The diaphragm main body 42D generally has the shape of a thin disk whose outer diameter is approximately equal to the inner diameter of the housing 30B and has no hole. Since the diaphragm main body 42D has no hole, the transmission section 80 is joined to the diaphragm 40D by means of laser welding in a state in which an end surface of the transmission section 80 at one end thereof is in contact with a surface of the diaphragm main body 42 located on the rear end side thereof (on the upper side in the drawing) . Namely, the transmission section 80 is fixed to the diaphragm 40D through a joint portion 90D which contains the metal constituting the diaphragm 40D and the metal constituting the transmission section 80. The joint portion 90D is formed to have an annular shape as in the case of the first and second embodiments. Also, the outer diameter of the diaphragm main body 42D is approximately equal to the inner diameter of the housing 30B.

As shown in FIG. 16, in the method of manufacturing the pressure sensor 10D of the third embodiment, in the transmission section fixing step (step S16D of FIG. 16), step S165 is performed in place of the steps S164 and S168 in the second embodiment. Also, the manufacturing method of the third embodiment does not has a step corresponding to the step S24 in the second embodiment. The remaining steps are the same as those in the second embodiment. In the transmission section fixing step S16D, first, a diaphragm transmission section joined body 48 (FIG. 15) composed of the diaphragm 40D and the transmission section 80 joined together is prepared (step S165). In step S165, the diaphragm transmission section joined body 48 may be made by joining the transmission section 80 to the diaphragm 40D by means of laser welding, or the diaphragm transmission section joined body 48 composed of the transmission section 80 and the diaphragm 40D joined together may be prepared in advance. The diaphragm transmission section joined body 48 is pushed with a predetermined load from the forward end side of the housing 30B so as to press the piezoelectric element 51 against the support plate 32 by the transmission section 80, to thereby apply a predetermined preload to the piezoelectric element 51 (step S166). Notably, as in the case of the second embodiment, the preload applied to the piezoelectric element 51 is adjusted based on the charge generated by the piezoelectric element 51. In a state in which the predetermined preload is applied to the piezoelectric element 51, the second projecting portion 45 of the diaphragm 40D and the housing 30B are welded together, whereby the diaphragm 40D is fixed to the housing 30B (step S162). Since the diaphragm 40D has no hole as described above, in the diaphragm transmission section joined body 48, the transmission section 80 does not project toward the forward end side from the diaphragm 40D. Therefore, the step S24 (a step of cutting the forward end of the transmission section 80) in the second embodiment is unnecessary.

In the pressure sensor 10D of the present embodiment, since the outer diameter of the diaphragm main body 42D of the diaphragm 40D is approximately equal to the inner diameter of the housing 30B, the diaphragm 40D can be fitted into the housing 30B (the housing axial hole 31). Accordingly, when a preload is applied to the piezoelectric element 51 by the diaphragm transmission section joined body 48, the diaphragm 40D can move within the housing 30B in the direction of the axial line OL. Thus, it becomes possible to apply a predetermined preload to the piezoelectric element 51 in a state in which the diaphragm 40D does not deform, and to fix the diaphragm 40D to the housing 30B in a state in which the preload is applied. As a result, as in the case of the second embodiment, a preload can be accurately applied to the piezoelectric element 51. Namely, it is possible to accurately apply a preload to the piezoelectric element 51 from the forward end side of the pressure sensor 10D through use of the diaphragm 40D having no hole.

Also, since the step of cutting the forward end of the transmission section 80 (step S24 in the second embodiment) becomes unnecessary, the manufacturing process becomes easier.

In the third embodiment, like the diaphragm 40C shown in FIG. 14, the diaphragm 40D may be formed such that the outer diameter of the diaphragm main body 42D becomes greater than the inner diameter of the housing 30B, and the inner diameter of the second projecting portion 45 becomes approximately equal to the outer diameter of the thin wall portion 39 of the housing 30B.

### D. Modifications:

The present invention is not limited to the above described embodiments and may be embodied in various other forms without departing from the scope of the invention. For example, the technical features in the embodiments corresponding to the technical features described above can be appropriately replaced or combined to solve some of or all the foregoing problems or to achieve some of or all the foregoing effects. Also, a technical feature which is not described as an essential feature in the present specification may be appropriately deleted. For example, the following modifications are possible.

### (1) Modification 1:

In the above-descried embodiments, the fixing of the housing 30 and the diaphragm 40 and the fixing of the diaphragm 40 and the transmission section 80 are performed by means of laser welding. However, other welding methods such as arc welding and electron beam welding may be employed. Any welding method may be employed so long as the welding method can form the joint portion 90, 92 at a desired angle.

### (2) Modification 2:

In the above-descried embodiments, the pressure sensor 10 has the diameter increasing portion 34 formed at the forward end portion thereof, and the pressure sensor 10 comes into airtight contact with the cylinder head of the internal combustion engine at the diameter increasing portion 34. However, the pressure sensor may have a different structure. Instead of providing the diameter increasing portion at the forward end portion of the pressure sensor, a portion which comes into airtight contact with the cylinder head may be provided on the rear end side of the diameter increasing portion 34 of each embodiment; for example, on the metallic member 20.

### (3) Modification 3:

In the above-descried embodiments, the pressure sensor 10 is used to detect the combustion pressure of the internal combustion engine. However, the pressure sensor 10 may have a different structure and may be applied to, for example, an air pressure gage in equipment other than an internal combustion engine.

### (4) Modification 4:

In the first embodiment, the laser light incident angle θ1 at the time of formation of the joint portion 90 is set to satisfy the relation of -60° ≤ θ1 ≤ 60°, and in the second embodiment, the laser light incident angle θ2 at the time of formation of the joint portion 92 is set to satisfy the relation of -60° ≤ θ2 ≤ 60°. However, the laser light incident angles θ1 and θ2 are not limited thereto. The laser light incident angle θ is preferably set to satisfy the relation of -60° ≤ θ ≤ 60°, because when the laser light incident angle θ satisfies the relation of -60° ≤ θ ≤ 60°, the variation in sensitivity can be suppressed.

### (5) Modification 5:

The shapes of the housing 30 and the diaphragm 40 are not limited to those employed in the above-described embodiments. For example, in the above-described embodiments, the diaphragm 40 has the first projecting portion 44. However, the first projecting portion 44 may be omitted.

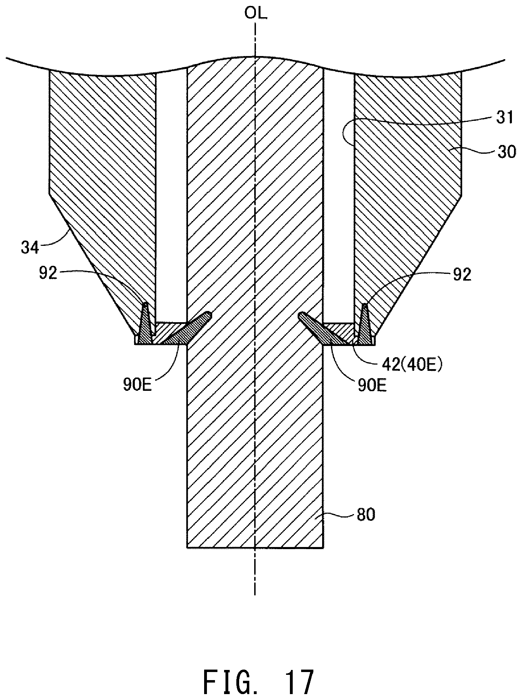

FIG. 17 is a sectional view schematically showing a diaphragm 40E according to a modification. The diaphragm 40E of the modification has only the diaphragm main body 42 of the diaphragm 40 of the first embodiment. In the case where the diaphragm does not have the first projecting portion 44, the diaphragm main body 42 and the transmission section 80 are joined to each other.

Also, a pressure sensor may be manufactured by the pressure sensor manufacturing method of the first embodiment through use of the housing 30B and the diaphragm 40B or 40C shown in the above-described second embodiment.

The invention has been described in detail with reference to the above embodiments. However, the invention should not be construed as being limited thereto. It should further be apparent to those skilled in the art that various changes in form and detail of the invention as shown and described above may be made as defined by the wording of the claims.

## Claims

1. A method of manufacturing a pressure sensor (10) which comprises:
a tubular housing (30) including a support plate (32) formed on a one-end side of the housing to have a lid-like shape;
a diaphragm (40) provided on an other-end side of the housing;
a piezoelectric element (51) which outputs an electrical signal corresponding to pressure received by the diaphragm (40); and
a rod-shaped transmission section (80) which transmits the pressure to the piezoelectric element (51),
the method comprising:
accommodating the piezoelectric element (51) into the housing (30); and
fixing the transmission section (80) to the housing (30) through the diaphragm (40) in a state in which a predetermined preload is applied to the piezoelectric element (51) in an axial direction of the housing (30) by the piezoelectric element (51) being pressed against the support plate (32) by the transmission section (80).

2. The method of manufacturing a pressure sensor as claimed in claim 1, wherein
the diaphragm (40) has a hole (41); and
in the transmission section fixing step, after the diaphragm (40) is fixed to the housing (30), the transmission section (80) is fixed to the diaphragm (40) in a state in which the predetermined preload is applied to the piezoelectric element (51) by the transmission section (80) inserted into the hole (41) of the diaphragm.

3. The method of manufacturing a pressure sensor as claimed in claim 1, wherein in the transmission section fixing step, the diaphragm (40) is fixed to the housing (30) in a state in which the predetermined preload is applied to the piezoelectric element (51) by the transmission section (80) fixed to the diaphragm (40).

4. The method of manufacturing a pressure sensor as claimed in claim 2, wherein
the diaphragm (40) of the pressure sensor has an annular first projecting portion (44) provided around the hole (41) and projecting toward the outside of the housing in a direction parallel to an axial line of the diaphragm; and
in the transmission section fixing step, the transmission section (80) is fixed to the first projecting portion (44) of the diaphragm by means of laser welding,
wherein a first incident angle θ1 of laser light for the laser welding with respect to an orthogonal line orthogonal to the axial line is set to satisfy a relation of -60° ≤ θ1 ≤ 60°.

5. The method of manufacturing a pressure sensor as claimed in claim 4, wherein the first incident angle θ1 of laser light is 0°.

6. The method of manufacturing a pressure sensor as claimed in any one of claims 1 to 5, wherein
the diaphragm (40B) of the pressure sensor has an annular second projecting portion (45) provided along an outer periphery of the diaphragm and projecting toward the inside of the housing in a direction parallel to an axial line of the diaphragm; and
in the transmission section fixing step, the second projecting portion (45) of the diaphragm is fixed to a side surface of the housing (30B) by means of laser welding,
wherein a second incident angle θ2 of laser light for the laser welding with respect to an orthogonal line orthogonal to the axial line is set to satisfy a relation of -60° ≤ θ2 ≤ 60°.

7. The method of manufacturing a pressure sensor as claimed in claim 6, wherein the second incident angle θ2 of laser light is 0°.

8. The method of manufacturing a pressure sensor as claimed in any one of claims 1 to 7, further comprising cutting, after the transmission section fixing step, at least a portion of the transmission section (80) projecting from the diaphragm (40) toward the outside of the housing.

9. A pressure sensor comprising:
a tubular housing (30) including a support plate (32) formed on a one-end side of the housing to have a lid-like shape;
a lid-shaped diaphragm (40) fixed to the other end of the housing;
a piezoelectric element (51) which is accommodated in the housing and outputs an electrical signal corresponding to pressure received by the diaphragm; and
a rod-shaped transmission section (80) which is fixed to the diaphragm, the rod-shaped transmission section being in contact with the piezoelectric element, and transmitting the pressure received by the diaphragm to the piezoelectric element, wherein
the transmission section (80) is fixed to the diaphragm (40) in a state in which a predetermined preload is applied to the piezoelectric element (51) by the transmission section (80) .

10. The pressure sensor as claimed in claim 9, wherein
the diaphragm has a hole (41), and the transmission section (80) is inserted into the hole (41) of the diaphragm.

11. The pressure sensor as claimed in claim 10, wherein
the diaphragm has an annular first projecting portion (44) provided around the hole (41) and projecting toward the outside of the housing in a direction parallel to an axial line of the diaphragm;
the transmission section (80) is fixed to the first projecting portion (44) of the diaphragm through a first joint portion (90) which contains a metal constituting the diaphragm and a metal constituting the transmission section; and
in a cross section of the diaphragm passing through the axial line, a first intersecting angle θc1 between an imaginary first average line and an imaginary orthogonal line orthogonal to the axial line satisfies a relation of -60° ≤ θc1 ≤ 60°, where the imaginary first average line is formed by a set of points each of which is equidistant from a first imaginary first border line which is one imaginary border line between the first joint portion (90) and the diaphragm (40) on the side toward the housing and a second imaginary first border line which is the other imaginary border line between the first joint portion and the diaphragm located on the side opposite the housing with respect to the first imaginary first border line.

12. The pressure sensor as claimed in claim 11, wherein the first intersecting angle θc1 is 0°.

13. The pressure sensor as claimed in any one of claims 9 to 12, wherein
the diaphragm has an annular second projecting portion (45) provided along an outer periphery of the diaphragm and projecting toward the housing in a direction parallel to an axial line of the diaphragm; and
the diaphragm is fixed, at the second projecting portion (45), to a side surface of the housing (30B) through a second joint portion (92B) which contains a metal constituting the diaphragm and a metal constituting the housing.

14. The pressure sensor as claimed in claim 13, wherein in a cross section of the diaphragm passing through the axial line, a second intersecting angle θc2 between an imaginary second average line La and an imaginary orthogonal line orthogonal to the axial line satisfies a relation of -60° ≤ θc2 ≤ 60°, where the imaginary first average line is formed by a set of points each of which is equidistant from a first imaginary second border line which is one imaginary border line between the second joint portion (92B) and the diaphragm (40B) on the side toward the housing and a second imaginary second border line which is the other imaginary border line between the second joint portion and the diaphragm located on the side opposite the housing with respect to the first imaginary second border line.

15. The pressure sensor as claimed in claim 14, wherein the second intersecting angle θc2 is 0°.

## Patentansprüche

1. Verfahren zur Herstellung eines Drucksensors (10), welcher aufweist:
ein rohrförmiges Gehäuse (30), aufweisend eine Trägerplatte (32), welche auf einer Seite des einen Endes des Gehäuses ausgebildet ist, um eine deckelartige Form aufzuweisen;
eine Membran (40), welche auf einer Seite des anderen Endes des Gehäuses bereitgestellt ist;
ein piezoelektrisches Element (51), welches ein elektrisches Signal entsprechend einem von der Membran (40) aufgenommenen Druck ausgibt; und
einen stabförmigen Übertragungsbereich (80), welcher den Druck an das piezoelektrische Element (51) überträgt,
wobei das Verfahren umfasst:
Aufnehmen des piezoelektrischen Elements (51) in dem Gehäuse (30); und
Befestigen des Übertragungsbereichs (80) an dem Gehäuse (30) durch die Membran (40) in einem Zustand, in dem eine vorbestimmte Vorspannung an das piezoelektrische Element (51) in einer axialen Richtung des Gehäuses (30) angelegt wird, indem das piezoelektrische Element (51) von dem Übertragungsbereich (80) gegen die Trägerplätte (32) gedrückt wird.

2. Verfahren zur Herstellung eines Drucksensors nach Anspruch 1, wobei
die Membran (40) ein Loch (41) aufweist; und in dem Schritt des Befestigens des Übertragungsbereichs nachdem die Membran (40) an dem Gehäuse (30) befestigt wird, der Übertragungsbereich (80) in einem Zustand, in dem die vorbestimmte Vorspannung an das piezoelektrische Element (51) angelegt wird, an der Membran (40) befestigt wird, indem der Übertragungsbereich (80) in das Loch (41) der Membran eingeführt wird.

3. Verfahren zur Herstellung eines Drucksensors nach Anspruch 1, wobei in dem Schritt des Befestigens des Übertragungsbereichs die Membran (40) in einem Zustand, in dem die vorbestimmte Vorspannung an das piezoelektrische Element (51) angelegt wird, an dem Gehäuse (30) befestigt wird, indem der Übertragungsbereich (80) an der Membran (40) befestigt wird.

4. Verfahren zur Herstellung eines Drucksensors nach Anspruch 2, wobei
die Membran (40) des Drucksensors einen ringförmigen ersten Vorsprungsabschnitt (44) aufweist, welcher um das Loch (41) herum bereitgestellt ist und in einer parallel zu einer Axiallinie der Membran verlaufenden Richtung nach außerhalb des Gehäuses vorsteht; und
in dem Schritt des Befestigens des Übertragungsbereichs der Übertragungsbereich (80) mittels Laserschweißen an dem ersten Vorsprungsabschnitt (44) der Membran befestigt wird,
wobei ein erster Einfallswinkel θ1 von Laserlicht zum Laserschweißen in Bezug auf eine zu der Axiallinie orthogonal verlaufende orthogonale Linie festgelegt ist, um ein Verhältnis von -60° ≤ θ1 ≤ 60° zu erfüllen.

5. Verfahren zur Herstellung eines Drucksensors nach Anspruch 4, wobei der erste Einfallswinkel θ1 von Laserlicht 0° beträgt.

6. Verfahren zur Herstellung eines Drucksensors nach einem der Ansprüche 1 bis 5, wobei
die Membran (40B) des Drucksensors einen ringförmigen zweiten Vorsprungsabschnitt (45) aufweist, welcher entlang eines Außenumfangs der Membran bereitgestellt ist und in einer parallel zu einer Axiallinie der Membran verlaufenden Richtung nach innerhalb des Gehäuses vorsteht; und
in dem Schritt des Befestigens des Übertragungsbereichs der zweite Vorsprungsabschnitt (45) der Membran mittels Laserschweißen an einer Seitenfläche des Gehäuses (30B) befestigt wird,
wobei ein zweiter Einfallswinkel θ2 von Laserlicht zum Laserschweißen in Bezug auf eine orthogonal zu der Axiallinie verlaufende orthogonale Linie festgelegt ist, um ein Verhältnis von -60° ≤ θ2 ≤ 60° zu erfüllen.

7. Verfahren zur Herstellung eines Drucksensors nach Anspruch 6, wobei der zweite Einfallswinkel θ2 von Laserlicht 0° beträgt.

8. Verfahren zur Herstellung eines Drucksensors nach einem der Ansprüche 1 bis 7, ferner umfassend nach dem Schritt des Befestigens des Übertragungsbereichs Schneiden zumindest eines Teils des Übertragungsbereichs (80), welcher von der Membran (40) nach außerhalb des Gehäuses vorsteht.

9. Drucksensor, aufweisend:
ein rohrförmiges Gehäuse (30), aufweisend eine Trägerplatte (32), welche auf einer Seite des einen Endes des Gehäuses ausgebildet ist, um eine deckelartige Form aufzuweisen;
eine deckelförmige Membran (40), welche an dem anderen Ende des Gehäuses befestigt ist;
ein piezoelektrisches Element (51), welches in dem Gehäuse aufgenommen ist und ein elektrisches Signal entsprechend einem von der Membran aufgenommenen Druck ausgibt; und
einen stabförmigen Übertragungsbereich (80), welcher an der Membran befestigt ist, wobei der stabförmige Übertragungsbereich mit dem piezoelektrischen Element in Kontakt steht und den von der Membran aufgenommenen Druck an das piezoelektrische Element überträgt, wobei
der Übertragungsbereich (80) in einem Zustand, in dem eine vorbestimmte Vorspannung durch den Übertragungsbereich (80) an das piezoelektrische Element angelegt ist, an der Membran (40) befestigt ist.

10. Drucksensor nach Anspruch 9, wobei die Membran ein Loch (41) aufweist und der Übertragungsbereich (80) in das Loch (41) der Membran eingeführt ist.

11. Drucksensor nach Anspruch 10, wobei die Membran einen ringförmigen ersten Vorsprungsabschnitt (44) aufweist, welcher um das Loch (41) herum bereitgestellt ist und in einer parallel zu einer Axiallinie der Membran verlaufenden Richtung nach außerhalb des Gehäuses vorsteht;
der Übertragungsbereich (80) an dem ersten Vorsprungsabschnitt (44) der Membran durch einen ersten Verbindungsabschnitt (90) befestigt ist, welcher ein Metall enthält, welches die Membran darstellt, und ein Metall enthält, welches den Übertragungsbereich darstellt; und
in einem Querschnitt der Membran, welcher die Axiallinie durchläuft, ein erster Schnittwinkel θc1 zwischen einer imaginären ersten Durchschnittslinie und einer imaginären orthogonalen Linie, welche orthogonal zu der Axiallinie verläuft, ein Verhältnis von -60° ≤ θc1 ≤ 60° erfüllt, wobei die imaginäre erste Durchschnittslinie durch eine Reihe von Punkten ausgebildet ist, von denen jeder gleich weit von einer ersten imaginären ersten Grenzlinie, welche eine imaginäre Grenzlinie zwischen dem ersten Verbindungsabschnitt (90) und der Membran (40) auf der dem Gehäuse zugewandten Seite ist, und einer zweiten imaginären ersten Grenzlinie, welche die andere imaginäre Grenzlinie zwischen dem ersten Verbindungsabschnitt und der Membran ist und sich in Bezug auf die erste imaginäre erste Grenzlinie auf der dem Gehäuse gegenüberliegenden Seite befindet, entfernt ist.

12. Drucksensor nach Anspruch 11, wobei der erste Schnittwinkel θc1 0° beträgt.

13. Drucksensor nach einem der Ansprüche 9 bis 12, wobei
die Membran einen ringförmigen zweiten Vorsprungsabschnitt (45) aufweist, welcher entlang eines Außenumfangs der Membran bereitgestellt ist und in einer parallel zu einer Axiallinie der Membran verlaufenden Richtung zu dem Gehäuse hin vorsteht; und
die Membran in dem zweiten Vorsprungsabschnitt (45) an einer Seitenfläche des Gehäuses (30B) durch einen zweiten Verbindungsabschnitt (92B) befestigt ist, welcher ein Metall enthält, welches die Membran darstellt, und ein Metall enthält, welches das Gehäuse darstellt.

14. Drucksensor nach Anspruch 13, wobei in einem Querschnitt der Membran, welcher die Axiallinie durchläuft, ein zweiter Schnittwinkel θc2 zwischen einer imaginären zweiten Durchschnittslinie La und einer imaginären orthogonalen Linie, welche orthogonal zu der Axiallinie verläuft, ein Verhältnis von -60° ≤ θc2 ≤ 60° erfüllt, wobei die imaginäre erste Durchschnittslinie durch eine Reihe von Punkten ausgebildet ist, von denen jeder gleich weit von einer ersten imaginären zweiten Grenzlinie, welche eine imaginäre Grenzlinie zwischen dem zweiten Verbindungsabschnitt (92B) und der Membran (40B) auf der dem Gehäuse zugewandten Seite ist, und einer zweiten imaginären zweiten Grenzlinie, welche die andere imaginäre Grenzlinie zwischen dem zweiten Verbindungsabschnitt und der Membran ist und sich in Bezug auf die erste imaginäre zweite Grenzlinie auf der dem Gehäuse gegenüberliegenden Seite befindet, entfernt ist.

15. Drucksensor nach Anspruch 14, wobei der zweite Schnittwinkel θc2 0° beträgt.

## Revendications

1. Procédé de fabrication d'un capteur de pression (10), lequel comprend :
un logement tubulaire (30) incluant une plaque de support (32) formée sur un côté d'une extrémité du logement de manière à se présenter sous la forme d'un couvercle ;
un diaphragme (40) prévu sur un côté d'une autre extrémité du logement ;
un élément piézo-électrique (51), lequel produit un signal électrique correspondant à une pression reçue par le diaphragme (40), et
une section de transmission en forme de tige (80), laquelle transmet la pression à l'élément piézo-électrique (51),
le procédé comprenant les étapes consistant à :
loger l'élément piézo-électrique (51) dans le logement (30), et
fixer la section de transmission (80) sur le logement (30) à travers le diaphragme (40) dans un état où une précharge prédéterminée est appliquée à l'élément piézo-électrique (51) dans une direction axiale du logement (30) par l'élément piézo-électrique (51) étant pressé contre la plaque de support (32) par la section de transmission (80).

2. Procédé de fabrication d'un capteur de pression selon la revendication 1, dans lequel
le diaphragme (40) présente un trou (41), et
lors de l'étape de fixation de la section de transmission, après fixation du diaphragme (40) sur le logement (30), la section de transmission (80) est fixée sur le diaphragme (40) dans un état où la précharge prédéterminée est appliquée à l'élément piézo-électrique (51) par la section de transmission (80) introduite dans le trou (41) du diaphragme.

3. Procédé de fabrication d'un capteur de pression selon la revendication 1, dans lequel lors de l'étape de fixation de la section de transmission, le diaphragme (40) est fixé sur le logement (30) dans un état où la précharge prédéterminée est appliquée à l'élément piézo-électrique (51) par la section de transmission (80) fixée sur le diaphragme (40).

4. Procédé de fabrication d'un capteur de pression selon la revendication 2, dans lequel
le diaphragme (40) du capteur de pression présente une première portion saillante annulaire (44) prévue autour du trou (41) et faisant saillie vers l'extérieur du logement dans une direction parallèle à une ligne axiale du diaphragme, et
lors de l'étape de fixation de la section de transmission, la section de transmission (80) est fixée sur la première portion saillante (44) du diaphragme par soudage au laser, et
dans lequel un premier angle incident θ1 de lumière laser pour le soudage au laser par rapport à une ligne orthogonale, orthogonale à la ligne axiale, est réglé de manière à satisfaire une relation telle que -60 °≤ θ1 ≤ 60 °.

5. Procédé de fabrication d'un capteur de pression selon la revendication 4, dans lequel le premier angle incident θ1 de lumière laser est égal à 0 °.

6. Procédé de fabrication d'un capteur de pression selon l'une quelconque des revendications 1 à 5, dans lequel
le diaphragme (40B) du capteur de pression présente une seconde portion saillante annulaire (45) prévue le long d'une périphérie extérieure du diaphragme et faisant saillie vers l'intérieur du logement dans une direction parallèle à une ligne axiale du diaphragme, et
lors de l'étape de fixation de la section de transmission, la seconde portion saillante (45) du diaphragme est fixée sur une surface latérale du logement (30B) par soudage au laser, et
dans lequel un second angle incident θ2 de lumière laser pour le soudage au laser par rapport à une ligne orthogonale, orthogonale à la ligne axiale, est réglé de manière à satisfaire une relation telle que -60 °≤ θ2 ≤ 60 °.

7. Procédé de fabrication d'un capteur de pression selon la revendication 6, dans lequel le second angle incident θ2 de lumière laser est égal à 0 °.

8. Procédé de fabrication d'un capteur de pression selon l'une quelconque des revendications 1 à 7, comprenant en outre une étape de découpe, après l'étape de fixation de la section de transmission, d'au moins une portion de la section de transmission (80) faisant saillie à partir du diaphragme (40) vers l'extérieur du logement.

9. Capteur de pression, comprenant :
un logement tubulaire (30) incluant une plaque de support (32) formée sur un côté d'une extrémité du logement de manière à se présenter sous la forme d'un couvercle ;
un diaphragme en forme de couvercle (40) fixé sur l'autre extrémité du logement ;
un élément piézo-électrique (51), lequel est logé dans le logement et produit un signal électrique correspondant à une pression reçue par le diaphragme, et
une section de transmission en forme de tige (80), laquelle est fixée sur le diaphragme, la section de transmission en forme de tige étant en contact avec l'élément piézo-électrique, et transmettant la pression reçue par le diaphragme à l'élément piézo-électrique, dans lequel
la section de transmission (80) est fixée sur le diaphragme (40) dans un état où une précharge prédéterminée est appliquée à l'élément piézo-électrique (51) par la section de transmission (80).

10. Capteur de pression selon la revendication 9, dans lequel
le diaphragme présente un trou (41), et la section de transmission (80) est introduite dans le trou (41) du diaphragme.

11. Capteur de pression selon la revendication 10, dans lequel
le diaphragme présente une première portion saillante annulaire (44) prévue autour du trou (41) et faisant saillie vers l'extérieur du logement dans une direction parallèle à une ligne axiale du diaphragme, et
la section de transmission (80) est fixée sur la première portion saillante (44) du diaphragme par le biais d'une première portion de joint (90), laquelle contient un métal constituant le diaphragme et un métal constituant la section de transmission, et
dans une section transversale du diaphragme traversant la ligne axiale, un premier angle d'intersection θc1 entre une première ligne moyenne imaginaire et une ligne orthogonale imaginaire, orthogonale à la ligne axiale, satisfait une relation telle que -60 °≤ θc1 ≤ 60 °, où la première ligne moyenne imaginaire est formée par un ensemble de points, chacun d'entre eux étant équidistant par rapport à une première ligne de première délimitation imaginaire, laquelle est une ligne de délimitation imaginaire entre la première portion de joint (90) et le diaphragme (40) sur le côté orienté vers le logement et une seconde ligne de première délimitation imaginaire, laquelle est l'autre ligne de délimitation imaginaire entre la première portion de joint et le diaphragme située sur le côté opposé au logement par rapport à la première ligne de première délimitation imaginaire.

12. Capteur de pression selon la revendication 11, dans lequel le premier angle d'intersection θc1 est égal à 0 °.

13. Capteur de pression selon l'une quelconque des revendications 9 à 12, dans lequel
le diaphragme présente une seconde portion saillante annulaire (45) prévue le long d'une périphérie extérieure du diaphragme et faisant saillie vers le logement dans une direction parallèle à une ligne axiale du diaphragme, et
le diaphragme est fixé, sur la seconde portion saillante (45), sur une surface latérale du logement (30B) par le biais d'une seconde portion de joint (92B), laquelle contient un métal constituant le diaphragme et un métal constituant le logement.

14. Capteur de pression selon la revendication 13, dans lequel dans une section transversale du diaphragme traversant la ligne axiale, un second angle d'intersection θc2 entre une seconde ligne moyenne imaginaire La et une ligne orthogonale imaginaire, orthogonale à la ligne axiale, satisfait une relation telle que -60 °≤ θc2 ≤ 60 °, où la première ligne moyenne imaginaire est formée par un ensemble de points, chacun d'entre eux étant équidistant par rapport à une première ligne de seconde délimitation imaginaire, laquelle est une ligne de délimitation imaginaire entre la seconde portion de joint (92B) et le diaphragme (40B) sur le côté orienté vers le logement et une seconde ligne de seconde délimitation imaginaire, laquelle est l'autre ligne de délimitation imaginaire entre la seconde portion de joint et le diaphragme située sur le côté opposé au logement par rapport à la première ligne de seconde délimitation imaginaire.

15. Capteur de pression selon la revendication 14, dans lequel le second angle d'intersection θc2 est égal à 0 °.
